(19) Europäisches Patentamt
European Patent Office
Office européen des brevets

(11) EP 1 745 167 B1

(12) EUROPEAN PATENT SPECIFICATION

(45) Date of publication and mention of the grant of the patent:
**23.02.2011 Bulletin 2011/08**

(21) Application number: **05735945.7**

(22) Date of filing: **08.04.2005**

(51) Int Cl.:
***D01F 6/46*** *(2006.01)* ***D04H 3/14*** *(2006.01)*

(86) International application number:
**PCT/US2005/012106**

(87) International publication number:
**WO 2005/111282 (24.11.2005 Gazette 2005/47)**

(54) **IMPROVED NONWOVEN FABRIC AND FIBERS**

VERBESSERTER VLIESSTOFF UND VERBESSERTE FASERN

TISSU ET FIBRES NON TISSÉS AMÉLIORÉS

(84) Designated Contracting States:
**AT BE BG CH CY CZ DE DK EE ES FI FR GB GR HU IE IS IT LI LT LU MC NL PL PT RO SE SI SK TR**

(30) Priority: **30.04.2004 US 566692 P**
**13.09.2004 US 609414 P**

(43) Date of publication of application:
**24.01.2007 Bulletin 2007/04**

(73) Proprietor: **DOW GLOBAL TECHNOLOGIES INC.**
**Midland MI 48674 (US)**

(72) Inventors:
- **ETHIOPIA, Samuel**
  **Frempont, CA 94555 (US)**
- **PATEL, Rajen, M.**
  **Lake Jackson, TX 77566 (US)**
- **CLAASEN, Gert, J.**
  **CH-8134 Adliswil (CH)**
- **STEWART, Kenneth, B., Jr.**
  **Lake Jackson, TX 77566 (US)**
- **ALLGEUER, Thomas, T.**
  **CH-8832 Wollerau (CH)**
- **PEPPER, Randy, E.**
  **Lake Jackson, TX 77566 (US)**
- **KNICKERBOCKER, Edward, N.**
  **Lake Jackson, TX 77566 (US)**
- **PRESSLY, Thomas, G.**
  **San Antonio, TX 78253 (US)**

(74) Representative: **Hayes, Adrian Chetwynd et al**
**Boult Wade Tennant**
**Verulam Gardens**
**70 Gray's Inn Road**
**London WC1X 8BT (GB)**

(56) References cited:
**WO-A-00/70134 WO-A-03/040442**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 745 167 B1

## Description

### FIELD OF THE INVENTION

The present invention relates to nonwoven webs or fabrics. In particular, the present invention relates to nonwoven webs having superior abrasion resistance and excellent softness characteristics. The nonwoven materials comprise fibers made from of a polymer blend of isotactic polypropylene, reactor grade propylene based elastomers or plastomers, and optionally, a homogeneously branched ethylene/alpha olefin plastomer or elastomer. The present invention also relates to cold drawn textured fibers comprising of a polymer blend of isotactic polypropylene and reactor grade propylene based elastomers or plastomers.

### BACKGROUND AND SUMMARY OF THE INVENTION

Nonwoven webs or fabrics are desirable for use in a variety of products such as bandaging materials, garments, disposable diapers, and other personal hygiene products, including pre-moistened wipes. Nonwoven webs having high levels of strength, softness, and abrasion resistance are desirable for disposable absorbent garments, such as diapers, incontinence briefs, training pants, feminine hygiene products, and the like. For example, in a disposable diaper, it is highly desirable to have soft, strong, nonwoven components, such as topsheets or backsheets (also known as outer covers). Topsheets form the inner, body contacting portion of a diaper which makes softness highly beneficial. Backsheets benefit from the appearance of being cloth-like, and softness adds to the cloth- like perception consumers prefer. Abrasion resistance relates to a nonwoven web's durability, and is characterized by a lack of significant loss of fibers in use

Abrasion resistance can be characterized by a nonwoven's tendency to "fuzz," which may also be described as "linting" or "pilling". Fuzzing occurs as fibers, or small bundles of fibers, are rubbed off, pulled, off, or otherwise released from the surface of the nonwoven web. Fuzzing can results in fibers remaining on the skin or clothing of the wearer or others, as well as a loss of integrity in the nonwoven, both highly undesirable conditions for users.

Fuzzing can be controlled in much the same way that strength is imparted, that is, by bonding or entangling adjacent fibers in the nonwoven web to one another. To the extent that fibers of the nonwoven web are bonded to, or entangled with, one another, strength can be increased, and fuzzing levels can be controlled.

Softness can be improved by mechanically post treating a nonwoven. For example, by incrementally stretching a nonwoven web by the method disclosed in U.S. Patent No. 5,626,571, issued May 6, 1997 in the names of Young et al., it can be made soft and extensible, while retaining sufficient strength for use in disposable absorbent articles. Dobrin et al. 976 teaches making a nonwoven web soft and extensible by employing opposed pressure applicators having three-dimensional surfaces which at least to a degree are complementary to one another. Young et al. teaches making a nonwoven web which is soft and strong by permanently stretching an inelastic base nonwoven in the cross-machine direction. However, neither Young et al., nor Dobrin et al., teach the non-fuzzing tendency of their respective nonwoven webs. For example, the method of Dobrin et al. may result in a nonwoven web having a relatively high fuzzing tendency. That is, the soft, extensible nonwoven web of Dobrin et al has relatively low abrasion resistance, and tends to fuzz as it is handled or used in product applications.

One method of bonding, or "consolidating", a nonwoven web is to bond adjacent fibers in a regular pattern of spaced, thermal spot bonds. One suitable method of thermal bonding is described in U.S. Pat. No. 3,855,046, issued December 17,1974 to Hansen et al.. Hansen et al. teach a thermal bond pattern having a 10-25% bond area (termed "consolidation area" herein) to render the surfaces of the nonwoven web abrasion resistant. However, even greater abrasion resistance together with increased softness can further benefit the use of nonwoven webs in many applications, including disposable absorbent articles, such as diapers, training pants, feminine hygiene articles, and the like.

By increasing the size of the bond sites; or by decreasing the distance between bond sites, more fibers are bonded, and abrasion resistance can be increased, (fuzzing can be reduced). However, the corresponding increase in bond area of the nonwoven also increases the bending rigidity (i.e., stifiness), which is inversely related to a perception of softness (i.e. as bending rigidity increases, softness decreases), In other words, abrasion resistance is directly proportional to bending rigidity when achieved by known methods. Because abrasion resistance correlates to fuzzing, and bending resistance correlates to perceived softness, known methods of nonwoven production require a tradeoff between the fuzzing and softness properties of a nonwoven.

Various approaches have been tried to improve the abrasion resistance of nonwoven materials without compromising softness. For example, U.S. Patent Nos. 5,405,682 and 5,425,987, both issued to Shawyer et al., teach a soft, yet durable, cloth-like nonwoven fabric - made with multicomponent polymeric strands. However, the multicomponent fibers disclosed comprise a relatively expensive elastomeric thermoplastic material (i.e. KRATONS) in one side or the sheath of multicomponent polymeric strands. U.S. Patent No. 5,336,552 issued to Strack et al., discloses a similar approach in which an ethylene alkyl acrylate copolymer is used as an abrasion resistance additive in multicomponent polyolefin fibers. U.S. Patent No. 5,545,464, issued to Stokes describes a pattern bonded nonwoven fabric of conjugate

fibers in which a lower melting point polymer is enveloped by a higher melting point polymer.

Bond patterns have also been utilized to improve strength and abrasion resistance in nonwovens while maintaining or even improving softness. Various bond patterns have been developed to achieve improved abrasion resistance without too negatively affecting softness. U.S. Patent No. 5,964,742 issued to McCormack et al., discloses a thermal bonding pattern comprising elements having a predetermined aspect ratio. The specified bond shapes reportedly provide sufficient numbers of immobilized fibers to strengthen the fabric, yet not so much as to increase stiffness unacceptably. U.S. Patent No. 6,015,605 issued to TsuJiyama et al., discloses very specific thermally press bonded portions in order to deliver strength, hand feeling, and abrasion resistance. However, with all bond pattern solutions it is believed that the essential tradeoff between bond area and softness remains.

Another approach for improving the abrasion resistance of nonwoven materials without compromising softness is to optimize the polymer content of the fibers used to make the nonwoven materials. A variety of fibers and fabrics have been made from thermoplastics, such as polypropylene, highly branched low density polyethylene (LDPE) made typically in a high pressure polymerization process, linear heterogeneously branched polyethylene (e.g., linear low density polyethylene made using Ziegler catalysis), blends of polypropylene and linear heterogeneously branched polyethylene, blends of linear heterogeneously branched polyethylene, and ethylene/vinyl alcohol copolymers.

Of the various polymers known to be extrudable into fiber, highly branched LDPE has not been successfully melt spun into fine denier fiber. Linear heterogeneously branched polyethylene has been made into monofilament, as described in USP 4,076,698 (Anderson et al.) Linear heterogeneously branched polyethylene has also been successfully made into fine denier fiber, as disclosed in USP 4,644,045 (Fowells), USP 4,830,907 (Sawyer et al.), USP 4,909,975 (Sawyer et al.) and in USP 4,578,414 (Sawyer et al.). Blends of such heterogeneously branched polyethylene have also been successfully made into fine denier fiber and fabrics, as disclosed in USP 4,842,922 (Krupp et al.), USP 4,990,204 (Krupp et al.) and USP 5,112,686 (Krupp et al.). USP 5,068,141 (Kubo et al.) also discloses making nonwoven fabrics from continuous heats bonded filaments of certain heterogeneously branched LLDPE having specified heats of fusion. While the use of blends of heterogeneously branched polymers produces improved fabric, the polymers are more difficult to spin without fiber breaks.

U.S. Patent 5,549,867 (Gessner et al.), describes the addition of a low molecular weight polyolefin to a polyolefin with a molecular weight (Mz) of from 400,000 to 580,000 to improve spinning. The Examples set forth in Gessner et al. are directed to blends of 10 to 30 weight percent of a lower molecular weight metallocene polypropylene with from 70 to 90 weight percent of a higher molecular weight polypropylene produced using a Ziegler-Natta catalyst.

WO 95/32091 (Stahl et al.) discloses a reduction in bonding temperatures by utilizing blends of fibers produced from polypropylene resins having different melting points and produced by different fiber manufacturing processes, e.g., meltblown and spunbond fibers. Stahl et al. claims a fiber comprising a blend of an isotactic propylene copolymer with a higher melting thermoplastic polymer. However, while Stahl et al. provides some teaching as to the manipulation of bond temperature by using blends of different fibers, Stahl et aL does not provide guidance as to means for improving fabric strength of fabric made from fibers having the same melting point

U.S. Patent 5,677,383, in the names of Lai, Knight, Chum, and Markovich discloses blends of substantially linear ethylene polymers with heterogeneously branched ethylene polymers, and the use of such blends in a variety of end use applications, including fibers. The disclosed compositions preferably comprise a substantially linear ethylene polymer having a density of at least 0.89 grams/centimeters$^3$. However, Lai et al. disclosed fabrication temperatures only above 165˚C. In contrast, to preserve fiber integrity, fabrics are frequently bonded at lower temperatures, such that all of the crystalline material is not melted before or during fusion.

European Patent Publication (EP) 340,982 discloses bicomponent fibers comprising a first component core and a second component sheath, which second component further comprises a blend of an amorphous polymer with an at least partially crystalline polymer. The disclosed range of the amorphous polymer to the crystalline polymer is from 15:85 to 00[sic, 90]:10. Preferably, the second component will comprise crystalline and amorphous polymers of the same general polymeric type as the first component, with polyester being preferred. For instance, the examples disclose the use of an amorphous and a crystalline polyester as the second component. EP 340,982, at Tables I and II, indicates that as the melt index of the amorphous polymer decreases, the web strength likewise detrimentally decreases. Incumbent polymer compositions include linear low density polyethylene and high density polyethylene having a melt index generally in the range of 0.7 to 200 grams/10 minutes.

US patents 6,015,617 and 6,270,891 teach the inclusion of a low melting point homogeneous polymer to a higher melting point polymer having an optimum melt index can usefully provide a calendered fabric having an improved bond performance, while maintaining adequate fiber spinning performance.

US patent 5,804,286 teaches that the bonding of LLDPE filaments into a spunbond web with acceptable abrasion resistance is difficult since the temperature at which acceptable tie down is observed is nearly the same as the temperature at which the filaments melt and stick to the calendar. This reference concludes that this explains why spunbonded LLDPE nonwovens have not found wide commercial acceptance.

While such polymers have found good success in the marketplace in fiber applications, the fibers made from

such polymers would benefit from an improvement in flexibility and bond strength, which would lead to soft abrasion-resistant fabrics, and accordingly to increased value to the nonwoven fabric and article manufacturers, as well as to the ultimate consumer. However, any benefit in softness, bond strength and abrasion resistance must not be at the cost of a detrimental reduction in spinnability or a detrimental increase in the sticking of the fibers or fabric to equipment during processing.

WO 03040442 discloses fibers comprising a propylene homopolymer or a copolymer of propylene and at least one of ethylene and one or more unsaturated comonomers.

Various polymer blends are also known for use in carpet fibers. US patent 5,486,419 teaches propylene polymer material optionally blended with polypropylene homopolymer for use in carpeting. The propylene polymer material in this reference is preferably a visbroken material containing one or more $C_4$-$C_8$ polyolefins.

Accordingly, there is a continuing unaddressed need for a nonwoven with greater softness and elongation while maintaining spinnability and abrasion resistance..

Additionally, there is a continuing unaddressed need for a low fuzzing, soft nonwoven suitable for use as a component in a disposable absorbent article.

Additionally, there is a continuing unaddressed need for a soft, extensible nonwoven web having relatively high abrasion resistance.

Further, there is a continuing unaddressed need for a method of processing a nonwoven such that abrasion resistance is achieved with little or no decrease in softness.

There is also a need for fibers, particularly spunbond fibers which have a broader bonding window, increased bonding strength and abrasion resistance, improved softness and good spinnability.

There is also a need for more cost effective carpet or upholstry fibers having comparable resiliency and wear properties as nylon. It is also desirable to have carpet fibers having improved stain and mildew resistance.

There is described herein a nonwoven material having a Fuzz/Abrasion of less than 0.5 mg/cm$^2$, and a flexural rigidity of less than or equal to 0.043*Basis Weight - 0.657 mN.cm. The nonwoven material should have a basis weight greater than 15 grams/m$^2$, a tensile strength, of more than 25 N/5cm in MD (at a basis weight of 20 GSM), and a consolidation area of less than 25%.

There is also described herein a spun bond nonwoven fabric made using fibers having a diameter in a range of from 0.1 to 50 denier and fibers comprises a polymer blend, wherein the polymer blend comprises:

a. from about 50 to about 95 percent (by weight of the polymer blend) of a first polymer which is an isotactic polypropylene homopolymer or random copolymer having a melt flow rate in the range of from about 10 to about 70 grams/10 minutes, and

b. from about 5 to about 50 percent (by weight of the polymer blend) of a second polymer which is a reactor grade propylene based elastomer or plastomer having a heat of fusion less than about 70 joules/gm, said propylene based elastomer or plastomer having a melt flow rate of from about 2 to about 1000 grams/10 minutes. When ethylene is used as a comonomer, the reactor grade propylene based elastomer or plastomer has from about 5 to about 15 percent (by weight of Component b) of ethylene, said propylene based elastomer or plastomer having a melt flow rate of from about 2 to about 1000 grams/10 minutes.

There is described herein a melt blown nonwoven fabric made using fibers having a diameter in a range of from 0.1 to 50 denier and fibers comprises a polymer blend, wherein the polymer blend comprises:

a. from about 50 to about 95 percent (by weight of the polymer blend) of a first polymer which is an isotactic polypropylene homopolymer or random copolymer having a melt flow rate in the range of from about 100 to about 2000 grams/10 minutes, and

b. from about 5 to about 50 percent (by weight of the polymer blend) of a second polymer which is a reactor grade propylene based elastomer or plastomer having a heat of fusion less than about 70 jonles/gm, said propylene based elastomer or plastomer having a melt flow rate of from about 100 to about 2000 grams/10 minutes. When ethylene is used as a comonomer, the reactor grade propylene based elastomer or plastomer has from about 5 to about 15 percent (by weight of Component b) of ethylene, said propylene based elastomer or plastomer having a melt flow rate of from about 100 to about 2000 grams/10 minutes.

There is also described herein a fiber, wherein the fiber has a denier greater than about 7 and wherein the fiber comprises a polymer blend comprising:

a from about 50 to about 95 percent by weight of the polymer blend, of a first polymer which is an isotactic polypropylene having a melt flow rate in the range of from about 2 to about 40 grams/10 minutes,

b. from about 5 to about 50 percent by weight of the polymer blend of a second polymer which is a reactor grade

propylene based elastomer or plastomer having a molecular weight distribution of less than about 3.5, wherein said second polymer has heat of fusion of less than about 90 joules/gm and wherein said second polymer has a melt flow rate of from about 0.5 to about 40 grams/10 minutes; and

wherein the polymer blend contains less than about 5 percent by weight of units derived from ethylene.

There is described herein a carpet made from such fibers.

In one aspect, the present invention provides a nonwoven fabric comprising a polymer blend comprising:

a. from about 50 to about 95 percent by weight of the polymer blend, of a first polymer which is an isotactic polypropylene having a melt flow rate in the range of from about 2 to about 2000 grams/10 minutes,
b. from about 5 to about 50 percent by weight of the polymer blend of a second polymer which is a reactor grade propylene based elastomer or plastomer having a molecular weight distribution of less than about 3.5, wherein said second polymer has heat of fusion of less than about 90 joules/gm and wherein said second polymer has a melt flow rate of from about 2 to about 2000 grams/10 minutes; and

wherein the polymer blend contains less than about 5 percent by weight of units derived from ethylene.

In a second aspect, the present invention provides a fiber of a polymer blend comprising:

a. from about 50 to about 95 percent by weight of the polymer blend of a first polymer component which is an isotactic polypropylene having a melt flow rate in the range of from about 2 to about 40 grams/10 minutes,
b. from about 5 to about 50 percent by weight of the polymer blend of a second polymer component which is a reactor grade propylene based elastomer or plastomer having a molecular weight distribution of less than about 3.5, wherein said second polymer has heat of fusion of less than about 90 joules/gm and wherein said second polymer has a melt flow rate of from about 0.5 to about 40 grams/ 10 minutes; and

wherein the polymer blend contains less than about 5 percent by weight of units derived from ethylene.

In a third aspect, the present invention provides article made from the fiber of the second aspect of the present invention, wherein the article is selected from the group consisting of carpet, upholstery fabric, apparel, wall coverings or any woven article.

DETAILED DESCRIPTION OF THE INVENTION

As used herein, the term "nonwoven web", refers to a web that has a structure of individual fibers or threads which are interlaid, but not in any regular, repeating manner. Nonwoven webs have been, in the past, formed by a variety of processes, such as, for example, air laying processes, meltblowing processes, spunbonding processes and carding processes, including bonded carded web processes.

As used herein, the term "microfibers", refers to small diameter fibers having an average diameter not greater than about 100 microns. Fibers, and in particular, spunbond fibers utilized in the present invention can be microfibers, or more specifically, they can be fibers having an average diameter of about 15-30 microns, and having a denier from about 1.5-3.0.

As used herein, the term "meltblown fibers", refers to fibers formed by extruding a molten thermoplastic material through a plurality of fine, usually circular, die capillaries as molten threads or filaments into a high velocity gas (e.g., air) stream which attenuates the filaments of molten thermoplastic material to reduce their diameter, which may be to a microfiber diameter. Thereafter, the meltblown fibers are carried by the high velocity gas stream and are deposited on a collecting surface to form a web of randomly dispersed meltblown fibers.

As used herein, the term "spunbonded fibers", refers to small diameter fibers which are formed by extruding a molten thermoplastic material as filaments from a plurality of fine, usually circular, capillaries of a spinneret with the diameter of the extruded filaments then being rapidly reduced by drawing.

As used herein, the terms "consolidation" and "consolidated" refer to the bringing together of at least a portion of the fibers of a nonwoven web into closer proximity to form a site, or sites, which function to increase the resistance of the nonwoven to external forces, e.g., abrasion and tensile forces, as compared to the unconsolidated web. "Consolidated" can refer to an entire nonwoven web that has been processed such that at least a portion of the fibers are brought into closer proximity, such as by thermal point bonding. Such a web can be considered a "consolidated web". In another sense, a specific, discrete region of fibers that is brought into close proximity; such as an individual thermal bond site, can be described as "consolidated".

Consolidation can be achieved by methods that apply heat and/or pressure to the fibrous web, such as thermal spot (i.e., point) bonding. Thermal point bonding can be accomplished by passing the fibrous web through a pressure nip formed by two rolls, one of which is heated and contains a plurality of raised points on its surface, as is described

in the aforementioned U.S. Pat No. 3,855, 046 issued to Hansen et al.. Consolidation methods can also include ultrasonic bonding, through-air bonding, and hydroentangtement Hydroentanglement typically involves treatment of the fibrous web with high pressure water jets to consolidate the web via mechanical fiber entanglement (friction) in the region desired to be consolidated, with the sites being formed in the area of fiber entanglement. The fibers can be hydroentangled as taught in U.S. Pat. Nos. 4,021,284 issued to Kalwaites on May 3, 1977 and 4,024,612 issued to Contrator et al. on May 24,1977. In the currently preferred embodiment, the polymeric fibers of the nonwoven are consolidated by point bonds, sometimes referred to as "partial consolidation" because of the plurality of discrete, spaced-apart bond sites.

As used herein, the term "polymer" generally includes, but is not limited to, homopolymers, copolymers, such as, for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiotactic and random symmetries.

As used herein, the term "polypropylene plastomers" includes reactor grade copolymers of propylene having heat of fusion between about 100 joules/gm to about 40 joules/gm and MWD < 3.5. An example of propylene plastomers include reactor grade propyleno-ethylene copolymer having weight percent ethylene in the range of about 3wt% to about 10wt%, having MWD< 3.5.

As used herein, the term "polypropylene elastomers" includes reactor grade copolymers of propylene having heat of fusion less than about 40 joules/gm and MWD < 3.5. An example of propylene elastomers include reactor grade propylene-ethylene copolymer having weight percent ethylene in the range of about 10wt% to about 15wt%, having MWD < 3.5.

As used herein, the term "extensible" refers to any material which, upon application of a biasing force, is elongatable, to at least about 50 percent more preferably at least about 70 percent without experiencing catastrophic failure,

All percentages specified herein are weight percentages unless otherwise specified.

As used herein a "nonwoven" or "nonwoven fabric" or "nonwoven material" means an assembly of fibers held together in a random web such as by mechanical interlocking or by fusing at least a portion of the fibers. Nonwoven fabrics can be made by various methods, including spunlaced (or hydrodynamically entangled) fabrics as disclosed in USP 3,485,706 (Evans) and USP 4,939,016 (Radwanski et al.); by carding and thermally bonding staple fibers; by spunbonding continuous fibers in one continuous operation; or by melt blowing fibers into fabric and subsequently calendering or thermally bonding the resultant web. These various nonwoven fabric manufacturing techniques are well known to those skilled in the art. The fibers of the present invention are particularly well suited to make a spunbonded nonwoven material.

The nonwoven material of the present invention will preferably have a basis weight (weight per unit area) from about 10 grams per square meter (gsm) to about to about 100 gsm. The basis weight can also be from about 15 gsm to about 60 gsm, and in one embodiment it can be 20 gsm. Suitable base nonwoven webs can have an average filament denier of about 0.10 to about 10. Very low deniers can be achieved by the use of splittable fiber technology, for example. In general, reducing the filament denier tends to produce softer webs, and low denier microfibers from about 0.10 to 2.0 denier can be utilized for even greater softness.

The degree of consolidation can be expressed as a percentage of the total surface area of the web that is consolidated. Consolidation can be substantially complete, as when an adhesive is uniformly coated on the surface of the nonwoven, or when bicomponent fibers are sufficiently heated so as to bond virtually every fiber to every adjacent fiber. Generally, however, consolidation is preferably partial, as in point bonding, such as thermal point bonding.

The discrete, spaced-apart bond sites formed by point bonding, such as thermal point bonding, only bond the fibers of the nonwoven in the area of localized energy input. Fibers or portions of fibers remote from the localized energy input remain substantially unbonded to adjacent fibers.

Similarly, with respect to ultrasonic or hydroentanglement methods, discrete, spaced apart bond sites can be formed to make a partially consolidated nonwoven web. The consolidation area, when consolidated by these methods, refers to the area per unit area occupied by the localized sites formed by bonding the fibers into point bonds (alternately referred to as "bond sites"), typically as a percentage of total unit area A method of determining consolidation area is detailed below.

Consolidation area can be determined from scanning electron microscope (SEM) images with the aid of image analysis software. One or preferably more SEM images can be taken from different positions on a nonwoven web sample at 20x magnification. These images can be saved digitally and imported into Image-Pro PlusO software for analysis. The bonded areas can then be traced and the percent area for these areas be calculated based on the total area of the SEM image. The average of images can be taken as the consolidation area for the sample.

A web preferably exhibits a percent consolidation area of less than about 25%, more preferably less than about 20% prior to mechanical posttreatment, if any.

The web is characterized by high abrasion resistance and high softness, which properties are quantified by the web's tendency to fuzz and bending or flexural rigidity, respectively. Fuzz levels (or "fuzz/abrasion") and flexural

rigidity were determined according to the methods set out in the Test Methods section of WO02/31245.

Fuzz levels, tensile strength and flexural rigidity are partly dependent on the basis weight of the nonwoven, as well as whether the fiber is made from a monocomponent or a bicomponent filament. For purposes of this invention a "monocomponent" fiber means a fiber in which the cross-section is relatively uniform. It should be understood that the cross section may comprise blends of more than one polymer but that it will not include "bicomponent" structures such as sheath-core, side-by side islands in the sea, etc. In general heavier fabrics (that is fabrics at higher basis weight) will have higher fuzz levels, everything else being equal. Similarly heavier fabrics will tend to have higher values for tenacity and flexural rigidity and lower values for softness as determined according to the softness panel test as described in S. Woekner, "softness and Touch - Important aspects of Non-wovens", EDANA Intenational Nonwovens Symposium, Rome Italy June (2003).

The nonwoven materials of the present invention preferably exhibit a fuzz/abrasion of less than about 0.5 $mg/cm^2$ more preferably less than about 0.3 $mg/cm^2$. It should be understood that the fuzz/abrasion will depend in part on the basis weight of the nonwoven as heavier fabrics will naturally produce more fuzz in the testing protocol.

It has been found that the spun bond nonwoven materials of the present invention can advantageously made using a fiber having a diameter in a range of from 0.1 to 50 denier which comprises a polymer blend, wherein the polymer blend comprises:

a. from about 50 to about 95 percent (by weight of the polymer blend) of a first polymer which is an isotactic polypropylene homopolymer or random copolymer having a melt flow rate (MFR) in the range of from about 10 to about 70 grams/10 minutes as determined by ASTM D-1238, Condition 230˚C/2.16 kg (formerly known as "Condition L"), and

b. from about 5 to about 50 percent (by weight of the polymer blend) of a second polymer which is a propylene based elastomer or plastomer having a heat of fusion (melting) less than about 70 joules/gm. When ethylene is used as a comonomer, the reactor grade propylene based elastomer or plastomer has from about 3 to about 15 percent (by weight of the second polymer) of ethylene, said propylene based elastomer or plastomer having a melt flow rate of from about 2 to about 1000 grams/10 minutes, and, and

It is preferred that the overall fiber contain less than 5 weight percent ethylene by weight of the fiber without regard to the optional ethylene third polymer.

The first polymer of the polymer blend is isotactic polypropylene homopolymer or random copolymer having a melt flow rate (MFR) in the range of from about 10 to about 2000 grams/10 minutes, preferably about 15 to 200 grams/10 minutes, more preferably about 25 to 40 grams/10 minutes as determined by ASTM D-1238, Condition 230˚C/2.16 kg (formerly known as "Condition L"). Suitable examples of material which can be selected for the first polymer include homopolymer polypropylene and random copolymers of propylene and α-olefins..

Homopolymer polypropylene suitable for use as the first polymer can be made in any way known to the art. Random copolymers of propylene and α-olefins, made in any way known to the art, can also be used as all or part of the first polymer of the present invention. Ethylene is the preferred α-olefin. The co-monomer content in the first polymer must be such that the first polymer has a heat of fusion more than 90 joules/gm, preferably more than 100 joules/gm and is therefore generally less than about three percent by weight of the copolymer of ethylene, preferably less than one percent by weight of ethylene. The heat of fusion is determined using differential scanning calorimetry (DSC) using a method similar to ASTM D3417-97, as described below.

The polymer sample having 5-10 mg weight is rapidly heated (about 100˚ C per minute) in the DSC to 230˚C and kept there for three minutes to erase all thermal history. The sample is cooled to -60˚C at 10˚C/min cooling rate and kept there for three minutes. The sample is then heated at 10˚C/min to 230˚C (second melting). The heat of fusion is determined using the-software to integrate the area area under the second melting curve using linear baseline. Note that the DSC needs to be well calibrated, using methods known in the art to obtain straight baselines, quantitative heats of fusion and accurate melting/crystallization temperatures.

The second polymer of the polymer blend is a reactor grade propylene based elastomer or plastomer having MWD < 3.5, and having heat of fusion less than about 90 joules/gm, preferably less than about 70 joules/gm, more preferably less than about 50 joules/gm. When ethylene is used as a comonomer, the reactor grade propylene based elastomer or plastomer has from about 3 to about 15 percent (by weight of Component b) of ethylene; preferably from about 5 to about 14 percent of ethylene, more preferably about 9 to 12 percent ethylene, by weight of the propylene based elastomer or plastomer. Suitable propylene based elastomers and/or plastomers are taught in WO03/040442.

It is intended that the berm "reactor grade" is as defined in US Patent 6,010,588 and in general refers to a polyolefin resin whose molecular weight distribution (MWD) or polydispersity has not been substantially altered after polymerization.

Although the remaining units of the propylene copolymer are derived from at least one comonomer such as ethylene, a $C_{4-20}$ α-olefin, a $C_{4-20}$ diene, a styrenic compound and the like, preferably the comonomer is at least one of

ethylene and a $C_{4-12}$ $\alpha$-olefin such as 1-hexene or 1-octane. Preferably, the remaining units of the copolymer are derived only from ethylene.

The amount of comonomer other than ethylene in the propylene based elastomer or plastomer is a function of, at least in part, the comonomer and the desired heat of fusion of the copolymer. If the comonomer is ethylene, then typically the comonomer-derived units comprise not in excess of about 15 wt % of the copolymer. The minimum amount of ethylene-derived units is typically at least about 3, preferable at least about 5 and more preferably at least about 9, wt % based upon the weight of the copolymer.

The propylene based elastomer or plastomer of this invention can be made by any process, and includes copolymers made by Zeigler-Natta, CGC (Constrained Geometry Catalyst), metallocene, and nonmetallocene, metal-centered, heteroaryl ligand catalysis. These copolymers include random, block and graft copolymers although preferably the copolymers are of a random configuration. Exemplary propylene copolymers include Exxon-Mobil VISTAMAXX polymer, and propylene/ethylene copolymers by The Dow Chemical Company.

The density of the propylene based elastomers or plastomers of this invention is typically at least about 0.850, can be at least about 0.860 and can also be at least about 0.865 grams per cubic centimeter ($g/cm^3$).

The weight average molecular weight (Mw) of the propylene based elastomers or plastomers of this invention can vary widely, but typically it is between about 10,000 and 1,000,000 (with the understanding that the only limit on the minimum or the maximum $M_w$ is that set by practical considerations). For hompolymers and copolymers used in the manufacture of meltblown fabrics, preferably the minimum Mw is about 20,000, more preferably about 25,000.

The polydispersity of the propylene based elastomers or plastomers of this invention is typically between about 2 and about 3.5. "Narrow polydisperity", "narrow molecular weight distribution", "narrow MWD" and similar terms mean a ratio ($M_w/M_n$) of weight average molecular weight ($M_w$) to number average molecular weight ($M_n$) of less than about 3.5, can be less than about 3.0, can also be less than about 2.8, can also be less than about 2.5, and can also be less than about 2.3. Polymers for use in fiber applications typically have a narrow polydispersity. Blends comprising two or more of the polymers of this invention, or blends comprising at least one copolymer of this invention and at least one other polymer, may have a polydispersity greater than 4 although for spinning considerations, the polydispersity of such blends is still preferably between about 2 and about 4.

In one preferred embodiment of this invention, the propylene based elastomers or plastomers are further characterized as having at least one of the following properties: (i) $^{13}C$ NMR peaks corresponding to a regio-error at about 14.6 and about 15.7 ppm, the peaks of about equal intensity, (ii) a DSC curve with a $T_{me}$ that remains essentially the same and a $T_{max}$ that decreases as the amount of comonomer, i.e., the units derived from ethylene and/or the unsaturated comonomer(s), in the copolymer is increased, and (iii) an X-ray diffraction pattern when the sample is slow-cooled that reports more gamma-form crystals than a comparable copolymer prepared with a Ziegler-Natta (Z-N) catalyst. Typically the copolymers of this embodiment are characterized by at least two, preferably all three, of these properties. In other embodiments of this invention, these copolymers are characterized further as also having one or both of the following characteristics: (iv) a B-value when measured according to the method of Koenig (described below) greater than about 1.03 when the comonomer content, i.e., the units derived from the comonomer other than propylene, is at least about 3 wt%, and (v) a skewness index, $S_{ix}$, greater than about-1.20. Each of these properties and their respective measurements are described in detail in USSN 10/139,786 filed May 5, 2002 (WO2/003040442) as supplemented below.

B-Value

"High B-value" and similar terms mean the ethylene units of a copolymer of propylene and ethylene, or a copolymer of propylene, ethylene and at least one unsaturated comonomer, is distributed across the polymer chain in a nonrandom manner. B-values range from 0 to 2. The higher the B-value, the more alternating the comonomer distribution in the copolymer. The lower the B-value, the more blocky or clustered the comonomer distribution in the copolymer. The high B-values of the polymers made using a nonmetallocene, metal-centered, heteroaryl ligand catalyst, such as described in U.S. Patent Publication No. 2003/0204017 A1, are typically at least about 1.03 as determined according to the method of Koenig (Spectroscopy of Polymer American Chemical Society, Washington, DC, 1992), preferable at least about 1.04, more preferably at least about 1.05 and in some instances at least about 1.06. This is very different from propylene-based copolymers typically made with metallocene catalysts, which generally exhibit B-values less than 1.00, typically less than 0.95. There are several ways to calculate B-value; the method described below utilizes the method of Koenig, J.L, where a B-value of 1 designates a perfectly random distribution of comonomer units. The B-value as described by Koenig is calculated as follows.

B is defined for a propylene / ethylene copolymer as:

$$B = \frac{f(EP + PE)}{2 \bullet F_E \bullet F_P}$$

where f(EP + PE) = the sum of the EP and PE diad fractions; and Fe and Fp = the mole fraction of ethylene and propylene in the copolymer, respectively. The diad fraction can be derived from triad data according to: f(EP + PE) = [EPB] + [EPP+PPE]/2 + [PEP] + [EEP+PEE]/2. The B-values can be calculated for other copolymers in an analogous manner by assignment of the respective copolymer diads. For example, calculation of the B-value for a propylene/1-octene copolymer uses the following equation:

$$B = \frac{f(OP + PO)}{2 \bullet F_O \bullet F_P}$$

For propylene polymers made with a metallocene catalyst, the B-values are typically between 0.8 and 0.95. In contrast, the B-values of the propylene polymers made with an activated nonmetallocene, metal-centered, heteroaryl ligand catalyst (as described below), are above about 1.03, typically between about 1.04 and about 1.08. In turn, this means that for any propylene-ethylene copolymer made with such a nonmetallocene metal-centered, heteroaryl catalyst, not only is the propylene block length relatively short for a given percentage of ethylene but very little, if any, long sequences of 3 or more sequential ethylene insertions are present in the copolymer, unless the ethylene content of the polymer is very high. The data in the following table are illustrative. The data for Table 6 below were made in a solution loop polymerization process similar to that described in U.S. Patent No. 5,977,251 to Kao et al., using an activated nonmetallocene; metal-centered, heteroaryl ligand catalysts as generally described in U.S. Patent Publication No. 2003/0204017 A1 Published October 30, 2003. Interestingly, the B-values of the propylene polymers made with the nonmetallocene, metal-centered, heteroaryl ligand catalysts remain high even for polymers with relatively large amounts, e.g., >30 mole % ethylene.

$^{13}$C NMR

The propylene ethylene copolymers suitable for use in this invention typically have substantially isotactic propylene sequences. "Substantially isotactic propylene sequences" and similar terms mean that the sequences have an isotactic triad (mm) measured by $^{13}$C NMR of greater than about 0.85, preferably greater than about 0.90, more preferably greater than about 0.92 and most preferably greater than about 0.93. Isotactic triads are well known in the art and are described in, for example, USP 5,504,172 and WO 00/01745 which refer to the isotactic sequence in terms of a triad unit in the copolymer molecular chain determined by $^{13}$C NMR spectra. NMR spectra are determined as follows.

$^{13}$C NMR spectroscopy is one of a number of techniques known in the art for measuring comonomer incorporation into a polymer. An example of this technique is described for the determination of comonomer content for ethylene/$\alpha$-olefin copolymers in Randall (Journal of Macromolecular Science, Reviews in Macromolecular Chemistry and Physics, C29 (2 & 3), 201 - 317 (1989)). The basic procedure for determining the comonomer content of an olefin interpolymer involves obtaining the $^{13}$C NMR spectrum under conditions where the intensity of the peaks corresponding to the different carbons in the sample is directly proportional to the total number of contributing nuclei in the sample. Methods for ensuring this proportionality are known in the art and involve allowance for sufficient time for relaxation after a pulse, the use of gated-decoupling techniques, relaxation agents, and the like. The relative intensity of a peak or group of peaks is obtained in practice from its computer-generated integral. After obtaining the spectrum and integrating the peaks, those peaks associated with the comonomer are assigned. This assignment can be made by reference to known spectra or literature, or by synthesis and analysis of model compounds, or by the use of isotopically labeled comonomer. The mole % comonomer can be determined by the ratio of the integrals corresponding to the number of moles of comonomer to the integrals corresponding to the number of moles of all of the monomers in the interpolymer, as described in Randall, for example.

The data is collected using a Varian UNITY Plus 400MHz NMR spectrometer, corresponding to a $^{13}$C resonance frequency of 100.4 MHz. Acquisition parameters are selected to ensure quantitative $^{13}$C data acquisition in the presence of the relaxation agent The data is acquired using gated $^{1}$H decoupling, 4000 transients per data file, a 7sec pulse repetition delay, spectral width of 24,200Hz and a file size of 32K data points, with the probe head heated to 130° C. The sample is prepared by adding approximately 3mL of a 50/50 mixture of tetrachloroethane-d2/orthodichlorobenzene that is 0.025M in chromium acetylacetonate (relaxation agent) to 0.4g sample in a 10mm NMR tube. The headspace of the tube is purged of oxygen by displacement with pure nitrogen. The sample is dissolved and homogenized by heating

the tube and its contents to 150°C with periodic refluxing initiated by heat gun.

Following data collection, the chemical shifts are internally referenced to the mmmm pentad at 21.90 ppm. Isotacticity at the triad level (mm) is determined from the methyl integrals representing the mm triad (22.5 to 21.28 ppm), the mr triad (21.28-20.40 ppm), and the rr triad (20.67-19.4 ppm). The percentage of mm tacticity is determined by dividing the intensity of the mm triad by the sum of the mm, mr, and rr triads. For propylene-ethylene copolymers made with catalyst systems, such as the nonmetallocene, metal-centered, heteroaryl ligand catalyst (described above) the mr region is corrected for ethylene and regio-error by subtracting the contribution from PPQ and PPE. For propylene-ethylene copolymers the rr region is corrected for ethylene and regio-error by subtracting the contribution from PQE and EPE. For copolymers with other monomers that produce peaks in the regions of mm, mr, and rr, the integrals for these regions are similarly corrected by subtracting the interfering peaks using standard NMR techniques, once the peaks have been identified. This can be accomplished, for example, by analyzing a series of copolymers of various levels of monomer incorporation, by literature assignments, by isotopic labeling, or other means which are known in the art.

For copolymers made using a nonmetallocene, metal-centered, heteroaryl ligand catalyst, such as described in U.S. Patent Publication NO. 2003/0204017, the $^{13}$C NMR peaks corresponding to a regio-error at about 14.6 and about 15.7 ppm are believed to be the result of stereoselective 2,1-insertion errors of propylene units into the growing polymer chain. In general, for a given comonomer content, higher levels of regio-errors lead to a lowering of the melting point and the modulus of the polymer, while lower levels lead to a higher melting point and a higher modulus of the polymer.

Matrix Method for Calculation of B-Values according to Koenig, J.J.

For propylene/ethylene copolymers the following procedure can be used to determine the comonomer composition and sequence distribution. Integral areas are determined from the $^{13}$C NMR spectrum and input into the matrix calculation to determine the mole fraction of each triad sequence. The matrix assignment is then used with the integrals to yield the mole fraction of each triad. The matrix calculation is a linear least squares implementation of Randall's (Journal of Macromolecular Chemistry and Physics, Reviews in Macromolecular Chemistry and Physics, C29 (2&3), 201-317, 1989) method modified to include the additional peaks and sequences for the 2,1 regio-error. Table A shows the integral regions and triad designations used in the assignment matrix. The numbers associated with each carbon indicate in which region of the spectrum it will resonate.

Mathematically the Matrix Method is a vector equation $s=fM$ where $M$ is an assignment matrix, $s$ is a spectrum row vector, and $f$ is a mole fraction composition vector. Successful implementation of the Matrix Method requires that $M$, $f$, and $s$ be defined such that the resulting equation is determined or over determined (equal or more independent equations than variables) and the solution to the equation contains the molecular information necessary to calculate the desired structural information. The first step in the Matrix Method is to determine the elements in the composition vector $f$. The elements of this vector should be molecular parameters selected to provide structural information about the system being studied. For copolymers, a reasonable set of parameters would be any odd n-ad distribution. Normally peaks from individual triads are reasonably well resolved and easy to assign, thus the triad distribution is the most often used in this composition vector $f$. The triads for the E/P copolymer are EEE, EEP, PEE, PEP, PPP, PPE, EPP, and EPE. For a polymer chain of reasonable high molecular weight (>= 10,000 g/mol), the $^{13}$C NMR experiment cannot distinguish EEP from PEE or PPE from EPP. Since all Markovian E/P copolymers have the mole fraction of PEE and EPP equal to each other, the equality restriction was chosen for the implementation as well. Same treatment was carried out for PPE and EPP. The above two equality restrictions reduce the eight triads into six independent variables. For clarity reason, the composition vector $f$ is still represented by all eight triads. The equality restrictions are implemented as internal restrictions when solving the matrix. The second step in the Matrix Method is to define the spectrum vector s. Usually the elements of this vector will be the well-defined integral regions in the spectrum. To insure a determined system the number of integrals needs to be as large as the number of independent variables. The third step is to determine the assignment matrix $M$. The matrix is constructed by finding the contribution of the carbons of the center monomer unit in each triad (column) towards each integral region (row). One needs to be consistent about-the polymer propagation direction when deciding which carbons belong to the central unit. A useful property of this assignment matrix is that the sum of each row should equal to the number of carbons in the center unit of the triad which is the contributor of the row. This equality can be checked easily and thus prevents some common data entry errors.

After constructing the assignment matrix, a redundancy check needs to be performed. In other words, the number of linearly independent columns needs to be greater or equal to the number of independent variables in the product vector. If the matrix fails the redundancy test, then one needs to go back to the second step and repartition the integral regions and then redefine the assignment matrix until the redundancy check is passed.

In general, when the number of columns plus the number of additional restrictions or constraints is greater than the number of rows in the matrix $M$ the system is overdetermined. The greater this difference is the more the system is overdetermined. The more overdetermined the system, the more the Matrix Method can correct for or identify inconsistent data which might arise from integration of low signal to noise (S/N) ratio data, or partial saturation of some resonances.

The final step is to solve the matrix. This is easily executed in Microsoft Excel by using the Solver function. The Solver works by first guessing a solution vector (molar ratios among different triads) and then iteratively guessing to minimize the sum of the differences between the calculated product vector and the input product vector s. The Solver also lets one input restrictions or constraints explicitly.

**Table A.** The contribution of each carbon on the central unit of each triad towards different integral regions. P=propylene, E=ethylene, Q=2,1 inserted propylene.

| Triad name | Structure | Region for 1 | Region for 2 | Region for 3 |
|---|---|---|---|---|
| PPP | 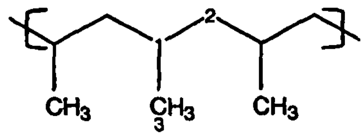 | L | A | O |
| PPE | 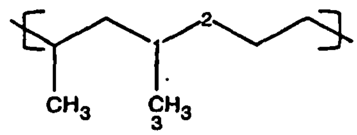 | J | C | O |
| EPP | 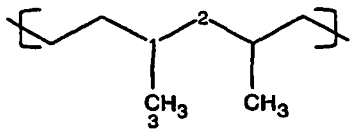 | J | A | O |
| EPE | 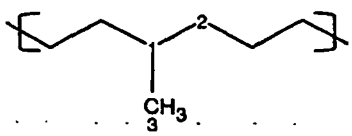 | H | C | O |
| EEEE | 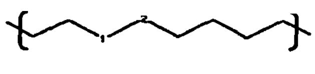 | K | K | |
| EEEP | 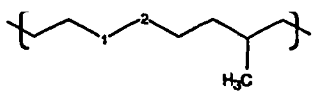 | K | J | |
| EEP | 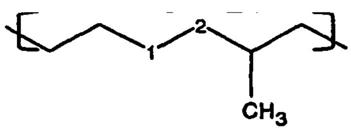 | M | C | |
| PEE | 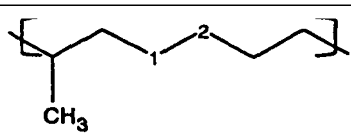 | M | J | |
| PEP | 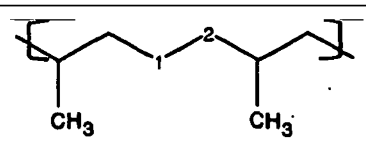 | N | C | |
| PQE | 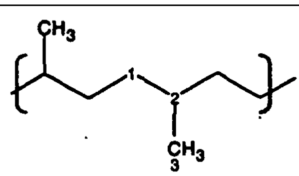 | F | G | O |

(continued)

| Triad name | Structure | Region for 1 | Region for 2 | Region for 3 |
|---|---|---|---|---|
| QEP | 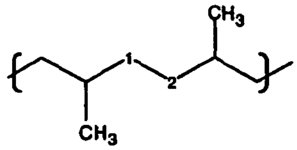 | F | F | |
| XPPQE | 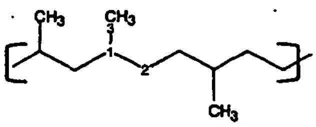 | J | F | O |
| XPPQP | 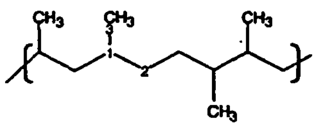 | J | E | O |
| PPQPX | 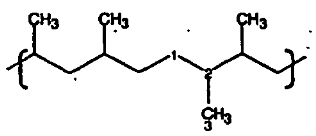 | I | D | Q |
| PQPPX | 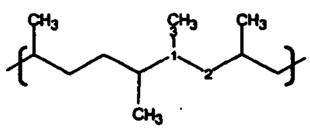 | F | B | P |

**Chemical Shift Ranges**

| A | B | C | D | E | F | G | H | I |
|---|---|---|---|---|---|---|---|---|
| 48.00 | 43.80 | 39.00 | 37.25 | 35.80 | 35.00 | 34.00 | 33.60 | 32.90 |
| 45.60 | 43.40 | 37.30 | 36.95 | 35.40 | 34.50 | 33.60 | 33.00 | 32.50 |
| **J** | **K** | **L** | **M** | **N** | **O** | **P** | **Q** | |
| 31.30 | 30.20 | 29.30 | 27.60 | 25.00 | 22.00 | 16.00 | 15.00 | |
| 30.30 | 29.80 | 28.20 | 27.10 | 24.50 | 19.50 | 15.00 | 14.00 | |

1,2 inserted propylene composition is calculated by summing all of the stereoregular propylene centered triad sequence mole fractions. 2,1 inserted propylene composition (Q) is calculated by summing all of the Q centered triad sequence mole fractions. The mole percent is calculated by multiplying the mole fraction by 100. C2 composition is determined by subtracting the P and Q mole percentage values from 100.

The skewness index is calculated from data obtained from temperature-rising elution fractionation (TREF). The data is expressed as a normalized plot of weight fraction as a function of elution temperature. The separation mechanism is analogous to that of copolymers of ethylene, whereby the molar content of the crystallizable component (ethylene) is the primary factor that determines the elution temperature. In the case of copolymers of propylene, it is the molar content of isotactic propylene units that primarily determines the elution temperature.

The shape of the metallocene curve arises from the inherent, random incorporation of comonomer. A prominent characteristic of the shape of the curve is the tailing at lower elution temperature compared to the sharpness or steepness of the curve at the higher elution temperatures. A statistic that reflects this type of asymmetry is skewness. Equation 1 mathematically represents the skewness index, $S_{ix}$, as a measure of this asymmetry.

$$S_{ix} = \frac{\sqrt[3]{\sum w_i * (T_i - T_{Max})^3}}{\sqrt{\sum w_i * (T_i - T_{Max})^2}} \qquad \text{Equation 1.}$$

The value, $T_{max}$, is defined as the temperature of the largest weight fraction eluting between 50 and 90°C in the TREF curve. $T_i$ and $w_i$ are the elution temperature and weight fraction respectively of an arbitrary, $i^{th}$ fraction in the TREF distribution. The distributions have been normalized (the sum of the $w_i$ equals 100%) with respect to the total area of the curve eluting above 30°C. Thus, the index reflects only the shape of the crystallized polymer. Any uncrystallized polymer (polymer still in solution at or below 30°C) has been omitted from the calculation shown in Equation 1.

Differential scanning calorimetry (DSC) is a common technique that can be used to examine the melting and crystallization of semi-crystalline polymers. General principles of DSC measurements and applications of DSC to studying semi-crystalline polymers are described in standard texts (e.g., E. A. Turi, ed., Thermal Characterization of Polymeric Materials, Academic Press, 1981). Certain of the copolymers of this invention are characterized by a DSC curve with a $T_{me}$ that remains essentially the same and a $T_{max}$ that decreases as the amount of unsaturated comonomer in the copolymer is increased. $T_{me}$ means the temperature at which the melting ends. $T_{max}$ means the peak melting temperature.

The propylene based elastomers or plastomers of this invention typically have an MFR of at least about 1, can be at least about 5, can also be at least about 10 can also be at least about 15 and can also be at least about 25. The maximum MFR typically does not exceed about 2,000, preferably it does not exceed about 1000, more preferably it does not exceed about 500, still more preferably it does not exceed about 200 and most preferably it does not exceed about 70. MFR for copolymers of propylene and ethylene and/or one or more $C_4$-$C_{20}$ $\alpha$-olefins is measured according to ASTM D-1238, condition L (2.16 kg, 230 degrees C).

In some embodiments of the present invention the polymer blend may optionally also contain an ethylene polymer for example, a high density polyethylene, low density polyethylene, linear low density polyethylene, and/or homogeneous ethylene/ $\alpha$-olefin plastomer or elastomer, preferably having a Melt Index of between 10 and 50 (as determined by ASTM D-1238, Condition 190°C/2.16 kg (formally known as "Condition (E)" and also known as $I_{2)}$ and a density in the range of from 0.855 g/cc to about 0.95 g/cc as determined by ASTM D-792 most preferably less than about 0.9. Suitable homogeneous ethylene/ $\alpha$-olefin plastomers or elastomers include linear and substantially linear ethylene polymers. The homogeneously branched interpolymer is preferably a homogeneously branched substantially linear ethylene/alpha-olefin interpolymer as described in U.S. Pat. No. 5,272,236. The homogeneously branched ethylene/alpha-olefin interpolymer can also be a linear ethylene/alpha-olefin interpolymer as described in U.S. Pat. No. 3,645,992 (Elston).

The substantially linear ethylene/alpha-olefin interpolymers discussed above are not "linear" polymers in the traditional sense of the term, as used to describe linear low density polyethylene (for example, Ziegler polymerized linear low density polyethylene (LLDPE)), nor are they highly branched polymers, as used to describe low density polyethylene (LDPE). Substantially linear ethylene/alpha-olefin interpolymers suitable for use in the present invention are herein defined as in U.S. Pat. No. 5,272,236 and in U.S. Pat. No. 5,278,272. Such substantially linear ethylene/alpha-olefin interpolymers typically are interpolymers of ethylene with at least one $C_3$-$C_{20}$ alpha-olefin and/or $C_4$-$C_{18}$ diolefins. Copolymers of ethylene and 1-octene are especially preferred.

Additives such as antioxidants (e.g., hindered phenols e.g., Irganox® 1010 made by Ciba-Geigy Corp.), phosphites (e.g., Irgafos® 168 made by Ciba-Geigy Corp.), cling additives (e.g., polyisobutylene (PIB)), polymeric processing aids (such as Dynamar™ 5911 from Dyneon Corporation, and Silquest™ PA-1 from General Electric), antiblock additives, slip additives such as Erucamide, pigments, can also be included in the first polymer, the second polymer, or the overall polymer composition useful to make the fibers and fabrics of the invention, to the extent that they do not interfere with the enhanced fiber and fabric properties discovered by Applicants.

It is preferred that the first polymer (the isotactic polypropylene homopolymer or random copolymer) comprises from at least 50 more preferably 60 and most preferably at least about 70 percent up to about 95% by weight of the polymer blend. The second polymer (the propylene based elastomer or plastomer) comprises at least about 5 percent by weight of the blend, more preferably at least about 10 percent, up to about 50 percent, more preferably 40 percent, most preferably 30 percent by weight of the polymer blend. The optional third polymer (the homogeneous ethylene/ $\alpha$-olefin plastomer or elastomer), if present, can comprise up to about 10 percent, more preferably up to about 5 percent by weight of the polymer blend.

The compositions disclosed herein can be formed by any convenient method, including dry blending the individual components and subsequently melt mixing or by pre-melt mixing in a separate extruder (e.g., a Banbury mixer, a Haake mixer, a Brabender internal mixer, or a twin screw extruder), or in a dual reactor.

Another technique for making the compositions in-situ is disclosed in US Pat. No. 5,844,045. This reference describes, inter alia, interpolymerizations of ethylene and $C_3$-$C_{20}$ alpha-olefins using a homogeneous catalyst in at least one reactor and a heterogeneous catalyst in at least one other reactor. The reactors can be operated sequentially or in parallel.

The nonwoven fabrics of present invention may include monocomponent and/or bicomponent fibers. "Bicomponent fiber" means a fiber that has two or more distinct polymer regions or domains. Bicomponent fibers are also known as conjugated or multicomponent fibers. The polymers are usually different from each other although two or more components may comprise the same polymer. The polymers are arranged in substantially distinct zones across the cross-section of the bicomponent fiber, and usually extend continuously along the length of the bicomponent fiber. The configuration of a bicomponent fiber can be, for example, a sheath/core arrangement (in which one polymer is surrounded by another), a side by side arrangement, a pie arrangement or an "islands-in-the sea" arrangement. Bicomponent fibers are further described in USP 6,225,243, 6,140,442, 5,382,400, 5,336,552 and 5,108,820.

In sheath-core bicomponent fibers, it is preferred that the polymer blends of the present invention comprise the core. The sheath may advantageously be comprised of polyethylene homopolymers and/or copolymers, including linear low density polyethylene and substantially linear low density polyethylene.

It should be understood that the nonwoven fabrics of the present invention can comprise of either continuous or noncontinuous fibers (such as staple fibers). Furthermore, it should be understood that in addition to the nonwoven materials described above, the fibers can be used in any other fiber application known in the art, such as binder fibers, and carpet fibers. For sheath-core fibers for use in binder fibers, the polymer blends of the present invention may advantageously comprise the sheath with the core being a polyethylene (including high density polyethylene and linear low density polyethylene), polypropylene (including homopolymer or random copolymer (preferably with no more than about 3% ethylene by weight of the random copolymer) or polyesters such as polyethylene terephthalate.

For carpet fibers, it is generally preferred that the fiber be a monocomponent fiber (that is, a fiber having a substantially uniform cross-section) comprising the blends of the present invention. The process for making fibers for carpets and for making the carpets from the fibers is generally known in the art (see for example, US 5,486,419). Typically, for carpet fibers, multiple filaments of the preferably monocomponent fiber are typically melt spun, drawn at a temperature below the melting point (often referred to as cold drawn), crimped at a temperature below the melting point, and wound on a spool as a crimped yarn. Subsequently, two or more crimped yarns are twisted (or plied) together and heat set at a temperature below the melting point. This twisted heat set yarn is then tufted into a carpet. It has been discovered that when the initial moncomponent multifilament fiber (or yarn) comprises the blends of the present invention, the yam exhibits improved recovery at low tensile elongation (e.g. less than 30%). Improved recovery would be expected to lead to better carpet durability and wear. Topically the carpet fibers of the present invention are in the range of 15-20 denier per filament, but can be in the range of 5-30 denier per filament. Draw ratios can range from 1.5x to 4.5x, more preferably 2.5x to 3.5x most preferably around 3x. Crimping of the multifilament yarns can be done at a temperature below the melting point of the fiber, preferably at a temperature of at least 100°C and more preferably at least 110°C and preferably less than 150°C, more preferably less than about 130°C. Two or more crimped yarns of the current invention can be twisted at twists per inch (TPI) in the range of 2-7 TPI, more preferably 4-6 TPI. The twisted yam of the current invention is heat set at a temperature below the melting point, preferably at a temperature of at least 110°C and more preferably at least 120°C and preferably less than 150°C, more preferably less than about 140°C.

One embodiment of the present invention is a conjugate fiber comprising a polymer which is a reactor grade propylene based elastomer or plastomer having a molecular weight distribution of less than about 3.5; wherein the polymer comprises at least a portion of the fiber surface. The polymer surface may advantageously further comprise a polyolefin grafted with an unsaturated organic compound containing at least one site of ethylenic unsaturation and at least one carbonyl group, with maleic anhydride being the most preferred unsaturated organic compound.

The conjugate fiber may be in any known configuration but he sheath-core configuration is most preferred. In such a case the core can be homopolymer polypropylene, random copolymer polypropylene having less than 3% by weight ethylene based on the weight of the random copolymer, polyethylene terephthalate, high density polyethylene or linear low density polyethylene.

These fibers can be staple fibers or binder fibers (also referred to as bonding fibers). These binder fibers can be used in an airlaid web, especially where the fiber comprises 5-35% by weight of the airlaid web. Staple fibers can be advantageously used in a carded web.

Another embodiment of the invnetion is a fiber comprising a reactor grade propylene based elastomer or plastomer having a molecular weight distribution of less than about 3.5 and an ethylene content of 3 to 7 percent by weight. These fibers can advantageously be used to make nonwoven webs.

EXAMPLES

A series of nonwoven fabrics was prepared using a spunbond process. The resins were as follows: Resin A

is a homopolymer polypropylene having a melt flow rate of 38 gram/10 minutes comercially available from The Dow Chemical Company as 5D49. Resin B is a polyethylene fiber grade resin made using a Ziegler-Natta catalyst, and having a melt index of 30 gram/10 minutes and density of 0.955 g/cc. Resin C is a propylene/ethylene elastomer with 12 percent by weight ethylene, having a melt flow rate of 25 gram/10 minutes and a density of 0.8665 g/cc which was prepared as described in WO03/040442. Resin D is a homopolymer polypropylene having a melt flow rate of 25 gram/10 minutes commercially available from The Dow Chemical Company as H502-25RG. Resin E is a propylene/ethylene elastomer with 15 percent by weight ethylene, having a melt flow rate of 25 gram/10 minutes and a density of 0.858 g/cc which was prepared as described in WO03/040442.

Nonwoven fabrics were made using the resins as indicated in Table 1 and evaluated for spinning and fabric properties performance. All of the blends were either melt blended ("compounded") or dry blended for these experiments, as indicated in Table 1. The trials were carried out on a spunbond line which used a Reicofil III technology with a beam width of 1.2 meters. A mono spin pack was used in this trial, each spinneret hole had a diameter of 0.6 mm (600 micron) and a L/D ratio of 4. The embossed roll of the chosen calendar had an oval pattern with a 16.19% bond area, and a bond points/$cm^2$ of 49.90 points/$cm^2$. All calendar temperatures that are mentioned in this patent refer to the temperature setpoint for the oil circulating through the embossed roll. The surface temperatures on the calendars were not measured. The nip pressure was maintained at 70 N/mm for all the resins.

Spunbond fabrics of examples 1 through 17 were made at an output of about 0.43 g/min/hole. Resins were spun to make about 1.65 denier fibers at a melt temperature of about 230˚C. Spunbond fabrics of examples 18 to 38 were made at an output of about 0.60 g/min/hole. Resins were spun to make about 2.2 denier fibers at a melt temperature of about 230˚C. Spunbond fabrics of examples 39 to 45 were made at an output of about 0.35 g/min/hole to make about 2.2 denier fibers at a polymer melt temperature of 215˚C.

The spunbond fabrics were cut into 1" by 6" strips (2.54 cm by 15.2 cm) in the machine direction (MD) for tensile testing using an Instron tensile tester. The strips were tested at a test speed of 8 inches/minute (20.3 cm/minute) with a grip to grip distance of 4 inches (10.1 cm). The extensibility and tensile strength is determined at the peak force. At the peak load, elongation is read and reported as elongation at peak force.

The Abrasion results for the examples were obtained using a Sutherland Ink Rub Tester. Prior to testing, the samples were conditioned for a minimum of four hours at 73˚F +/- 2 and constant relative humidity. A 12.5 cm x 5 cm strip of 320-grit aluminum oxide cloth sandpaper was then mounted on the Sutherland Ink Rub Tester. The sample was then weighed to the nearest 0.00001 gm and mounted onto the Tester. A 2 pound weight was then attached to the Sutherland Ink Rub Tester and the tester was run at a rate of 42 cycles per minute, for 20 cycles. Loose fibers were removed using adhesive tape, and the sample was re-weighed to determine the amount of material lost. This value was divided by the size of the abraded area, and these values are reported in Table 1.

Flexural Rigidity (alternatively known as 'bending modulus") for the Examples was determined according to EDANA 50.6-02. The Flexural Rigidity values obtained for the Examples are listed in Table 1.

Table 1

| Ex. # | Resin | Basis Weight (GSM) | Bonding Temp ˚C | Mono or bicomponent | Abrasion (mg/$cm^2$) | Flexural Rigidity (mN·cm) MD;CD | Elongation at Peak Force (%); MD | Tenacity (N/5cm); MD |
|---|---|---|---|---|---|---|---|---|
| Comp 1 | 100% A | 20 | 135 | mono | 0.7 | NA | 38 | 35 |
| Comp 2 | 100% A | 20 | 140 | Mono | 0.54 | NA | 58 | 42.2 |
| Comp 3 | 100%A | 20 | 145 | Mono | 0.30 | 0.38, 0.31 | 59 | 49 |
| Comp 4 | 100%A | 20 | 150 | Mono | 0.25 | NA | 61 | 48.8 |
| Comp 5 | 100%A | 20 | 155 | Mono | 0.21 | NA | 44 | 45.8 |
| Comp 6 | 100%B | 20 | 120 | Mono | 1.05 | NA | 24.6 | 9.7 |
| Comp 7 | 100%B | 20 | 125 | Mono | 0.99 | NA | 37 | 10.9 |
| Comp 8 | 100% B | 20 | 130 | Mono | 0.89 | 0.08; 0.07 | 71 | 14.9 |
| 9 | 70% A/30%C Compounded | 20 | 125 | Mono | 0.44 | NA | 71 | 39.4 |

(continued)

| Ex. # | Resin | Basis Weight (GSM) | Bonding Temp ˚C | Mono or bicomponent | Abrasion (mg/cm2) | Flexural Rigidity (mN·cm) MD;CD | Elongation at Peak Force (%); MD | Tenacity (N/5cm); MD |
|---|---|---|---|---|---|---|---|---|
| 10 | 70% A/30%C Compounded | 20 | 130 | Mono | 0.34 | NA | 74 | 39 |
| 11 | 70% A/30%C Compounded | 20 | 135 | Mono | 0.23 | 0.1; 0.09 | 80 | 40.1 |
| 12 | 70% A/30%C Compounded | 20 | 140 | Mono | 0.18 | NA | 70 | 36.3 |
| 13 | 70% A/30%C Compounded | 20 | 145 | Mono | 0.17 | NA | 47 | 28.7 |
| 14 | 60% A/40%C Compounded | 20 | 125 | Mono | 0.25 | NA | 85 | 29.4 |
| 15 | 60% A/40%C Compounded F | 20 | 130 | Mono | 0.2 | 0.07; 0.06 | 81 | 32.5 |
| 16 | 60% A/40%C Compounded | 20 | 135 | Mono | 0.18 | NA | 74 | 31.8 |
| 17 | 60% A/40%C Compounded | 20 | 140 | Mono | 0.13 | NA | 43 | 16.2 |
| 18 | 60% D/40%C Compounded | 20 | 115 | mono | 0.58 | NA | 72 | 28 |
| 19 | 60% D/40%C Compounded | 20 | 120 | mono | 0.57 | NA | 69 | 27 |
| 20 | 60% D/40%C Compounded | 20 | 125 | mono | 0.48 | NA | 66 | 31 |
| 21 | 60% D/40%C Compounded | 20 | 130 | mono | 0.38 | 0.06; 0.03 | 69 | 33 |
| 22 | 60% D/40%C Compounded | 20 | 135 | mono | 0.37 | NA | 67 | 30 |
| 23 | 60% D/40%C Compounded | 20 | 140 | mono | 0.3 | NA | 54 | 27 |
| 24 | 60% D/40%C Compounded | 20 | 145 | mono | 0.25 | NA | 44 | 27 |
| 25 | 60% D/40%C Dry Blend | 20 | 115 | mono | 0.49 | NA | 67 | 29 |
| 26 | 60% D/40%C Dry Blend | 20 | 120 | mono | 0.48 | NA | 68 | 27 |
| 27 | 60% D/40%C Dry Blend | 20 | 125 | mono | 0.39 | NA | 73 | 31 |
| 28 | 60% D/40%C Dry Blend | 20 | 130 | mono | 0.28 | 0.06; 0.02 | 65 | 28 |
| 29 | 60% D/40%C Dry Blend | 20 | 135 | mono | 0.26 | NA | 56 | 23 |

(continued)

| Ex. # | Resin | Basis Weight (GSM) | Bonding Temp ˚C | Mono or bicomponent | Abrasion (mg/cm2) | Flexural Rigidity (mN·cm) MD;CD | Elongation at Peak Force (%); MD | Tenacity (N/5cm); MD |
|---|---|---|---|---|---|---|---|---|
| 30 | 60% D/40%C Dry Blend | 20 | 140 | mono | 0.25 | NA | 48 | 25 |
| 31 | 60% D/40%C Dry Blend | 20 | 145 | mono | 0.2 | NA | 40 | 22 |
| 32 | 75% D/25%C Dry Blend | 20 | 120 | mono | 0.65 | NA | 53 | 28 |
| 33 | 75% D/25%C Dry Blend | 20 | 125 | mono | 0.58 | NA | 63 | 33 |
| 34 | 75% D/25%C Dry Blend | 20 | 130 | mono | 0.48 | 0.08; 0.07 | 66 | 36 |
| 35 | 75% D/25%C Dry Blend | 20 | 135 | mono | 0.44 | NA | 67 | 37 |
| 36 | 75% D/25%C Dry Blend | 20 | 140 | mono | 0.33 | NA | 61 | 35 |
| 37 | 75% D/25%C Dry Blend | 20 | 145 | mono | 0.25 | NA | 55 | 34 |
| 38 | 75% D/25%C Dry Blend | 20 | 150 | mono | 0.24 | NA | 44 | 31 |
| 39 | 80% D/20%E Dry Blend | 20 | 120 | mono | 0.72 | NA | 68 | 29 |
| 40 | 80% D/20%E Dry Blend | 20 | 125 | mono | 0.67 | NA | 63 | 35 |
| 41 | 80% D/20%E Dry Blend | 20 | 130 | mono | 0.51 | 0.12; 0.08 | 67 | 36 |
| 42 | 80% D/20%E Dry Blend | 20 | 135 | mono | 0.45 | NA | 62 | 34 |
| 43 | 80% D/20%E Dry Blend | 20 | 140 | mono | 0.37 | NA | 66 | 36 |
| 44 | 80% D/20%E Dry Blend | 20 | 145 | mono | 0.32 | NA | 49 | 34 |
| 45 | 80% D/20%E Dry Blend | 20 | 150 | mono | 0.27 | NA | 40 | 19 |

As seen from Table 1, nonwoven fabrics of the present invention are characterized by a balance of good abrasion resistance and softness.

A series of carpet fibers was also prepared to demonstrate another aspect of the present invention. For these examples the following resins were used: Resin G is a homopolymer polypropylene having a melt flow rate of 20 gram/10 minutes, commercially available from The Dow Chemical Company as 5E17V. Resin H is a propylene/ethylene elastomer with 11.2 percent by weight ethylene, having a melt flow rate of 1.5 gram/10 minutes, an MWD of 2.4 and a density of 0.865 g/cc which was prepared as described in WO03/040442. Resin I is a propylene/ethylene elastomer with 14.5 percent by weight ethylene, having a melt flow rate of 2 gram/10 minutes, an MWD of 2.4 and a density of 0.859 g/cc which was prepared as described in WO03/040442. Resin J is Nylon 6 B700 from BASF corporation.

Various blends as of these resins indicated in Table 3 below were melt blended using a twin-screw extruder. The blends were made into about 1150 denier yam (17 dpf) by extruding through 0.52 X 0.2 mm trilobal spinnerets, and spun at 970 m/min at the winder. Finish was applied to the fiber surface of at wt.% level 1%. Finish type for, each yam

is given in Table 2'below, along with the processing conditions.

Table 2

| | | | |
|---|---|---|---|
| Processing Conditions | | | |
| Trilobal, 67 Holes | | | |
| | PP | PP/PPcopolymer Blend | Nylon 6 |
| Extrusion Conditions | | | |
| Temperatures - Zone 1 | 200 | 200 | 220 |
| Zone 2 | 210 | 210 | 230 |
| Zone 3 | 225 | 225 | 245 |
| Zone 4 | 230 | 230 | 250 |
| Spinbeam | 230 | 230 | 250 |
| Melt Temp. | 238 | 238 | 259 |
| Melt Pump RPM | 20 | 20 | 20 |
| Melt Pump Inlet Pressure (psi) | 750 | 750 | 750 |
| Quench Air (QA) Temp | 16.1 | 16.1 | 16.1 |
| QA Cabinet Press ("H2O) | 0.12 | 0.12 | 0.12 |
| Screenpack Mesh | 150 | 150 | 150 |
| Finish Type (Goulston) | 8102 | 8102 | NF-9600 |
| Draw Zone Conditions | | | |
| Cold Roll Speed (m/min) | 297 | 297 | -- |
| Godet 1 Speed | 300 | 300 | 378 |
| Godet 1 Temp. | 90 | 90 | 95 |
| Godet 2 Speed | 970 | 970 | 1200 |
| Godet 2 Temp. | 120 | 120 | 130 |
| Draw Ratio | 3.2 | 3.2 | 3.2 |
| Texturizing Conditions | | | |
| Bulking Jet Air Temp. | 130 | 120 | 160 |
| Bulking Jet Air Press. | 80 | 80 | 90 |
| Transvector Press. | 40 | 45 | 45 |
| Air Entangling Jet Press. | 50 | 50 | 40 |

The tensile set at 25% strain (one cycle) was measured according to ASTM D 1774 and is reported in Table 3. Tenacity and Elongation at break were tested according to ASTM D2256 and are also reported in Table 3. In all of these measurements, the yarn was elongated to take out crimp prior to measuring the properties.

Table 3

| Example # | Blend (wt%) | Total denier | Set % at 25% strain | Elongation at Break (%) | Tenacity |
|---|---|---|---|---|---|
| 46 | 70G/30H | 1140 | 8.5 | 205 | 2 |
| 47 | 85G/15I | 1140 | 9.2 | 155 | 2.2 |
| 48 | 85G/15H | 1140 | 10.5 | 148 | 2.2 |
| Comp 9 | 100% G | 1140 | 11.6 | 141 | 2.5 |

(continued)

| Example # | Blend (wt%) | Total denier | Set % at 25% strain | Elongation at Break (%) | Tenacity |
|---|---|---|---|---|---|
| Comp 10 | 100% J | 1050 | 10.2 | 95 | 2.8 |

As seen from the above table the fibers of the current invention offer improved set and elongation to break parameters.

The fibers produced were then two-plied (or cabled, i.e., two yarns twisted together) at 5.5 twists/inch. Heat-setting was accomplished in a Superba heat setter at 250 ˚F (121˚C) for the polyolefin yarns and 260 ˚F (127˚C) for the Nylon-6 yarns. The cabled and heat set yarns were then tufted into cut pile carpets at a 40 oz/yd$^2$ face yarn basis weight (1359 g/m$^2$) and a 0.375" tuft height (0.95 cm). Tufting was done at 0.1" gauge (0.25 cm), and the stitches/inch (2.54 cm) required to achieve the desired basis weight varied between 12 and 13.5.

Bulk was measured on the carpet samples by cutting four tufts at different locations from the carpet. The tufts were carefully separated into individual filaments with Dumont electronic quality - type O tweezers. Individual filaments were taped (clear office tape) onto a ruler with 1/64 in. divisions. A filament was grasped with the tweezers at a length of 20/64 in. in length and straightened. The final length of the filament was recorded to the nearest 1/64 in., and used to calculate the bulk as the % retraction of the filament:100*(final length-initial length)/(final length). The results are reported in Table 4.

The twist level in the carpet was also examined. As noted above, the initial twist level was equal. The final twist level was determined by cutting tufts from different locations in the carpet. The number of half twists in each tuft were counted and divided by the length (un-stretched) of the tuft. The results are reported in Table 4.

In order to have a crude indication of relative softness, a blind test was conducted with an individual being asked to rank Examples 46, 47, 48 and comparative 9 in order of softness with the number one (1) indicating the sample that the individual considered to be the softest. The results are reported in Table 4.

Table 4

| Example # | Blend (wt%) | Bulk (%) | Twists/inch | Softness |
|---|---|---|---|---|
| 46 | 70G/30H | 24 | 4.3 | 2 |
| 47 | 85G/15I | 17 | 4.0 | 1 |
| 48 | 85G/15H | 19 | 4.2 | 3 |
| Comp 9 | 100% G | 15 | 3.5 | 4 |
| Comp 10 | 100% J | 14 | 4.7 | |

EXAMPLE 49

This Example 49 demonstrates calculation of B values for propylene-ethylene copolymer made using a metallocene catalyst synthesized according to Example 15 of U.S. Patent No. 5,616,664, using both a conventional interpretation of Koenig J.L. (Spectroscopy of Polymers American Chemical Society, Washington, DC, 1992) and the matrix method, as described above. The propylene-ethylene copolymer is manufactured according to Example 1 of U.S. Patent Publication No. 2003/0204017. The propylene-ethylene copolymer is analyzed as follows. The data is collected using a Varian UNITY Plus 400MHz NMR spectrometer, corresponding to a $^{13}$C resonance frequency of 100.4 MHz. Acquisition parameters are selected to ensure quantitative $^{13}$C data acquisition in the presence of the relaxation agent. The data is acquired using gated $^1$H decoupling, 4000 transients per data file, a 7sec pulse repetition delay, spectral width of 24,200Hz and a file size of 32K data points, with the probe head heated to 130˚ C. The sample is prepared by adding approximately 3mL of a 50/50 mixture of tetrachloroethane-d2/orthodichlorobenzene that is 0.025M in chromium acetylacetonate (relaxation agent) to 0.4g sample in a 10mm NMR tube. The headspace of the tube is purged of oxygen by displacement with pure nitrogen. The sample is dissolved and homogenized by heating the tube and its contents to 150˚C, with periodic refluxing initiated by heat gun.

Following data collection, the chemical shifts are internally referenced to the mmmm pentad at 21.90 ppm.

When using the conventional method of Koenig for metallocene propylene/ethylene copolymers, the following procedure is used to calculate the percent ethylene in the polymer using the Integral Regions assignments identified in the Journal of Macromolecular Chemistry and Physics, "Reviews in Macromolecular Chemistry and Physics," C29 (2&3), 201-317, (1989)

Table 5: Integral Regions for Calculating % Ethylene

| Region designation | Chemical Shift Range / ppm | Integral area |
|---|---|---|
| A | 44 - 49 | 259.7 |
| B | 36 - 39 | 73.8 |
| C | 32.8 - 34 | 7.72 |
| P | 31.0 - 30.8 | 64.78 |
| Q | Peak at 30.4 | 4.58 |
| R | Peak at 30 | 4.4 |
| F | 28.0 - 29.7 | 233.1 |
| G | 26 - 28.3 | 15.25 |
| H | 24 - 26 | 27.99 |
| I | 19 - 23 | 303.1 |
| Region D is calculated as follows: D = P - (G - Q)/2.<br>Region E is calculated as follows: E = R + Q+(G-Q)/2. | | |

The triads are calculated as follows:

Triad Calculation
PPP = (F + A - 0.5D) / 2

PPE = D
EPE = C
EEE=(E-0.5G)/2
PEE = G
PEP = H
MolesP=(B+2A)/2
Moles E = (E + G + 0.5B + H)/2

For this example, the mole % ethylene is calculated to be 13.6 mole %.
For this example, the triad mole fractions are calculated to be as follows:

Triad Mole Calculation
PPP = 0.6706
PPE = 0.1722
EPE = 0.0224
EEE = 0.0097
PEE = 0.0442
PEP = 0.0811

From this, the B value is calculated to be [(0.172/2)+0.022+(0.044/2)+0.081)]/[2 (0.136*0.864)]= 0.90 according to the conventional method.

Using the matrix method, as described above, for the same copolymer, the B-value is calculated to be = 0.90. This example shows that the matrix method produces results similar to those obtained using the convention calculation method.

Copolymers made with a nonmetallocene, metal-centered, heteroaryl ligand catalyst

The B-values for propylene-ethylene copolymers made using a nonmetallocene, metal-centered, heteroaryl ligand catalyst, such as described in U.S. Patent Publication NO. 2003/0204017, can be calculated according to Koenig using the conventional and matrix methods, as described above. For both the conventional and matrix method, the chemical shift (A-Q) ranges described, above, for the matrix method are utilized.

EXAMPLE 50

This Example 50 demonstrates calculation of B-values for propylene-ethylene copolymer made using a nonmetallocene, metal-centered, heteroaryl ligand catalyst, such as described in U.S. Patent Publication NO. 2003/0204017, which are polymerized using a solution loop polymerization process similar to that described in U.S. Patent No. 5,977,251 to Kao et al. Table 6 shows the B-values obtained using both a conventional interpretation of Koenig J.L.(Spectroscopy of Polymers American Chemical Society, Washington, DC, 1992), and the matrix method, as described above. As can be seen from Table 6, the propylene-ethylene copolymers of this Example exhibit much higher B-values than those exhibited by copolymers made using a metallocene catalyst.

Table 6: B-Values of Selected Propylene Polymers

| Number | MFR (g/ 10min ) | Density (kg/dm 3#) | Ethylene (wt%) | Regio-errors 14-16 ppm (mole %) | B-Value (Koenig, conventional method) | B-Value (Koenig, matrix method) |
|---|---|---|---|---|---|---|
| A-1 | 8.5 | 0.8771 | 8.6 | 0.67 | 1.06 | 1.06 |
| A-2 | 8.3 | 0.8692 | 11.7 | 0.49 | 1.08 | 1.07 |
| A-3 | 26.7 | 0.8673 | 12.1 | 0.57 | 1.10 | 1.08 |
| A-4 | 2.2 | 0.8667 | 12.4 | 0.56 | 1.09 | 1.08 |
| A-5 | 2.3 | 0.8605 | 15.9 | 0.54 | 1.11 | 1.09 |
| A-6 | 9.1 | 0.8638 | 13.6 | 0.50 | 1.11 | 1.09 |
| A-7 | 8.0 | 0.8601 | 15.4 | 0.50 | 1.11 | 1.10 |

While not described in detail herein, an alternative method for calculating a B-value for the polymers of interest would be to utilize the method set forth in U.S. Patent Publication No. 2003/0204017 A1. The method described therein is more discriminating than the method of Koenig and accentuates the differences between copolymers made using various catalytic systems. It should be noted that the copolymer of Example 49 above would exhibit a B-value of approximately 1.36 according to this alternative method versus the B-value of 0.90 obtained from both implementations of the Koenig method. For the alternative B-value calculation method, a B-value of 1.53. corresponds to a B-value of approximately 1.03 according to Koenig, a B-value of 1.55 corresponds to a B-value of approximately 1.04 according to Koenig, a B-value of 1.57. corresponds to a B-value of approximately 1.05 according to Koenig, a B-value of 1.58 corresponds to a B-value of approximately 1.08 according to Koenig, and a B-value of 1.67 corresponds to a B-value of approximately 1.19 according to Koenig.

## Claims

1. A nonwoven fabric comprising a polymer blend comprising:

    a. from about 50 to about 95 percent by weight of the polymer blend, of a first polymer which is an isotactic polypropylene having a melt flow rate in the range of from about 2 to about 2000 grams/10 minutes,
    b. from about 5 to about 50 percent by weight of the polymer blend of a second polymer which is a reactor grade propylene based elastomer or plastomer having a molecular weight distribution of less than about 3.5, wherein said second polymer has heat of fusion of less than about 90 joules/gm and wherein said second polymer has a melt flow rate of from about 2 to about 2000 grams/10 minutes; and

    wherein the polymer blend contains less than about 5 percent by weight of units derived from ethylene.

2. The fabric of claim 1 wherein the first polymer is selected from the group consisting of homopolymer polypropylene and random copolymers of propylene and one or more alpha-olefins.

3. The fabric of claim 2 wherein the first polymer is a random copolymer of propylene and ethylene and the units derived from ethylene represent no more than about 3 percent by weight of the first polymer.

**4.** The fabric of claim 1 wherein the second polymer is derived from ethylene comonomer and contains about 3 to 15 weight percent ethylene comonomer.

**5.** The fabric of claim 4 wherein the second polymer is derived from ethylene comonomer and contains about 5 to 13 weight percent ethylene comonomer.

**6.** The fabric of claim 5 wherein the second polymer contains about 9 to 12 percent by weight of the second polymer of units derived from ethylene.

**7.** The fabric of claim 6 wherein the second polymer has a melt flow rate of from about 20 to about 40 grams/10 minutes

**8.** The fabric of claim 1 wherein the second polymer has a heat of fusion of less than about 70 joules/gm, preferably less than about 50 joules/gm but more than about 10 joules/gm.

**9.** The fabric of claim 1 wherein optionally a third polymer is present at less than 10wt% which is selected from the group consisting of high density polyethylene, linear low density polyethylene or homogeneously branched linear or substantially linear polyethylene.

**10.** The fabric of claims 1 wherein the second polymer comprises about 10 to about 25 percent of the polymer blend.

**11.** The fabric of claim 9 wherein the third polymer comprises about 0.01 to about 5 percent by weight of the polymer blend.

**12.** The fabric of claim 1 wherein the fabric is a spunbond and/or melt blown fabric.

**13.** A fiber of a polymer blend comprising:

a. from about 50 to about 95 percent by weight of the polymer blend of a first polymer component which is an isotactic polypropylene having a melt flow rate in the range of from about 2 to about 40 grams/10 minutes,
b. from about 5 to about 50 percent by weight of the polymer blend of a second polymer component which is a reactor grade propylene based elastomer or plastomer having a molecular weight distribution of less than about 3.5, wherein said second polymer has heat of fusion of less than about 90 joules/gm and wherein said second polymer has a melt flow rate of from about 0.5 to about 40 grams/ 10 minutes; and

wherein the polymer blend contains less than about 5 percent by weight of units derived from ethylene.

**14.** A fiber of claim 13 having a denier greater than 7 g/9000 m.

**15.** The fiber of claim 13 wherein the fiber is cold drawn.

**16.** The fiber of claim 13 which has been crimped.

**17.** The fiber of claim 16 which has been heatset.

**18.** The fiber of claim 16 which has been further twisted and heateet.

**19.** An article made from the fiber of claim 13 wherein the article is selected from the group consisting of carpet, upholstery fabric, apparel, wall coverings or any woven article.

**20.** The fiber of claim 13 wherein the fiber is a conjugate fiber.

**21.** The fiber of claim 20 wherein the polymer comprises at least a portion of the fiber surface.

**22.** The fiber of claim 13 wherein the propylene elastomer or plastomer has an ethylene content of 3 to 7 percent by weight.

**23.** The fiber of claim 13 wherein the polymer surface further comprises a polyolefin grafted with an unsaturated organic compound containing at least one site of ethylenic unsaturation and at least one carbonyl group.

**24.** The fiber of claim 23 wherein the unsaturated organic compound is maleic anhydride.

**25.** The fabric of claim 1 or the fiber of claim 13, wherein the first polymer, the second polymer, or the overall polymer composition further comprises a slip additive.

## Patentansprüche

**1.** Vliesstoff umfassend eine Polymermischung umfassend:

a. von etwa 50 bis etwa 95 Gewichtsprozent der Polymermischung eines ersten Polymers, welches ein isotaktisches Polypropylen mit einer Schmelzflussrate im Bereich von etwa 2 bis etwa 2000 Gramm/10 Minuten ist,
b. von etwa 5 bis etwa 50 Gewichtsprozent der Polymermischung eines zweiten Polymers, welches ein Elastomer basierend auf Propylen mit Reaktorqualität oder ein Plastomer mit einer Molekulargewichtsverteilung von weniger als etwa 3,5 ist, wobei das zweite Polymer eine Schmelzwärme von weniger als etwa 90 Joule/gm aufweist und wobei das zweite Polymer eine Schmelzflussrate von etwa 2 bis etwa 2000 Gramm/10 Minuten aufweist; und

wobei die Polymermischung weniger als etwa 5 Gewichtsprozent Einheiten enthält, die von Ethylen abgeleitet sind.

**2.** Stoff nach Anspruch 1, wobei das erste Polymer ausgewählt ist aus der Gruppe bestehend aus Homopolymer-Polypropylen und statistischen Copolymeren aus Propylen und einem oder mehreren alpha-Olefinen.

**3.** Stoff nach Anspruch 2, wobei das erste Polymer ein statistisches Copolymer aus Propylen und Ethylen ist und die von Ethylen abgeleiteten Einheiten nicht mehr als etwa 3 Gewichtsprozent des ersten Polymers darstellen.

**4.** Stoff nach Anspruch 1, wobei das zweite Polymer von Ethylencomonomer abgeleitet ist und etwa 3 bis 15 Gewichtsprozent Ethylencomonomer enthält.

**5.** Stoff nach Anspruch 4, wobei das zweite Polymer von Ethylencomonomer abgeleitet ist und etwa 5 bis 13 Gewichtsprozent Ethylencomonomer enthält.

**6.** Stoff nach Anspruch 5, wobei das zweite Polymer etwa 9 bis 12 Gewichtsprozent des zweiten Polymers von Einheiten enthält, die von Ethylen abgeleitet sind.

**7.** Stoff nach Anspruch 6, wobei das zweite Polymer eine Schmelzflussrate von etwa 20 bis etwa 40 Gramm/10 Minuten aufweist.

**8.** Stoff nach Anspruch 1, wobei das zweite Polymer eine Schmelzwärme von weniger als etwa 70 Joule/gm, bevorzugt weniger als etwa 50 Joule/gm, aber mehr als etwa 10 Joule/gm aufweist.

**9.** Stoff nach Anspruch 1, wobei gegebenenfalls ein drittes Polymer mit weniger als 10 Gew.-% vorliegt, welches ausgewählt ist aus der Gruppe bestehend aus Polyethylen mit hoher Dichte, linearem Polyethylen mit geringer Dichte oder homogen-verzweigtem linearem oder im Wesentlichen linearem Polyethylen.

**10.** Stoff nach Anspruch 1, wobei das zweite Polymer etwa 10 bis etwa 25 Prozent der Polymermischung umfasst.

**11.** Stoff nach Anspruch 9, wobei das dritte Polymer etwa 0,01 bis etwa 5 Gewichtsprozent der Polymermischung umfasst.

**12.** Stoff nach Anspruch 1, wobei der Stoff ein Spinnvlies- und/oder schmelzgeblasener Stoff ist.

**13.** Faser einer Polymermischung umfassend:

a. von etwa 50 bis etwa 95 Gewichtsprozent der Polymermischung eines ersten Polymerbestandteils, welcher ein isotaktisches Polypropylen mit einer Schmelzflussrate im Bereich von etwa 2 bis etwa 40 Gramm/10 Minuten ist,
b. von etwa 5 bis etwa 50 Gewichtsprozent der Polymermischung eines zweiten Polymerbestandteils, welcher ein Elastomer basierend auf Propylen mit Reaktorqualität oder ein Plastomer mit einer Molekulargewichtsverteilung von weniger als etwa 3,5 ist, wobei das zweite Polymer eine Schmelzwärme von weniger als etwa 90

Joule/gm aufweist und wobei das zweite Polymer eine Schmelzflussrate von etwa 0,5 bis etwa 40 Gramm/10 Minuten aufweist; und

wobei die Polymermischung weniger als etwa 5 Gewichtsprozent Einheiten enthält, die von Ethylen abgeleitet sind.

**14.** Faser nach Anspruch 13 mit einem Denier größer als 7 g/9000 m.

**15.** Faser nach Anspruch 13, wobei die Faser kaltgezogen ist.

**16.** Faser nach Anspruch 13, welche gekräuselt wurde.

**17.** Faser nach Anspruch 16, welche wärmegehärtet wurde.

**18.** Faser nach Anspruch 16, welche weiter gedreht und wärmegehärtet wurde.

**19.** Artikel, der aus der Faser nach Anspruch 13 hergestellt wurde, wobei der Artikel ausgewählt ist aus der Gruppe bestehend aus Teppich, Möbelstoff, Kleidung, Wandbekleidungen oder jeglichem gewebten Artikel.

**20.** Faser nach Anspruch 13, wobei die Faser eine Konjugatfaser ist.

**21.** Faser nach Anspruch 20, wobei das Polymer mindestens einen Teil der Faseroberfläche umfasst.

**22.** Faser nach Anspruch 13, wobei das Propylenelastomer oder Plastomer einen Ethylengehalt von 3 bis 7 Gewichtsprozent aufweist.

**23.** Faser nach Anspruch 13, wobei die Polymeroberfläche weiter ein Polyolefin umfasst, welchem eine ungesättigte organische Verbindung aufgepfropft ist, die mindestens eine Stelle einer ethylenischen Unsättigung und mindestens eine Carbonylgruppe enthält.

**24.** Faser nach Anspruch 23, wobei die ungesättigte organische Verbindung Maleinsäureanhydrid ist.

**25.** Stoff nach Anspruch 1 oder Faser nach Anspruch 13, wobei das erste Polymer, das zweite Polymer oder die gesamte Polymerzusammensetzung weiter ein Gleitmittel umfasst.

## Revendications

**1.** Etoffe non-tissée, comportant un mélange de polymères comprenant :

a) d'environ 50 à environ 95 % en poids, par rapport au mélange de polymères, d'un premier polymère qui est un polypropylène isotactique présentant un indice de fluidité à chaud situé dans l'intervalle allant d'environ 2 à environ 2000 grammes par 10 minutes,
b) et d'environ 5 à environ 50 % en poids, par rapport au mélange de polymères, d'un deuxième polymère qui est un élastomère ou plastomère à base de propylène de qualité réacteur, présentant un indice de distribution des masses moléculaires inférieur à environ 3,5, lequel deuxième polymère présente une chaleur de fusion inférieure à environ 90 joules par gramme, ainsi qu'un indice de fluidité à chaud situé dans l'intervalle allant d'environ 2 à environ 2000 grammes par 10 minutes,

lequel mélange de polymères contient moins d'environ 5 % en poids de motifs dérivés de l'éthylène.

**2.** Etoffe conforme à la revendication 1, pour laquelle le premier polymère est choisi dans l'ensemble constitué par le polypropylène homo-polymère et les copolymères statistiques de propylène et d'une ou plusieurs alpha-oléfines.

**3.** Etoffe conforme à la revendication 2, dans laquelle le premier polymère est un copolymère statistique de propylène et d'éthylène, et les motifs dérivés de l'éthylène représentent au plus environ 3 % du poids de ce premier polymère.

**4.** Etoffe conforme à la revendication 2, dans laquelle le deuxième polymère a été préparé avec de l'éthylène comme comonomère, et contient à peu près 3 à 15 % en poids de motifs dérivés du comonomère éthylène.

5. Etoffe conforme à la revendication 4, dans laquelle le deuxième polymère a été préparé avec de l'éthylène comme comonomère, et contient à peu près 5 à 13 % en poids de motifs dérivés du comonomère éthylène.

6. Etoffe conforme à la revendication 5, dans laquelle le deuxième polymère contient à peu près 9 à 12 % en poids, par rapport au deuxième polymère, de motifs dérivés de l'éthylène.

7. Etoffe conforme à la revendication 6, dans laquelle le deuxième polymère présente un indice de fluidité à chaud d'environ 20 à environ 40 grammes par 10 minutes.

8. Etoffe conforme à la revendication 1, dans laquelle le deuxième polymère présente une chaleur de fusion inférieure à environ 70 joules par gramme, et de préférence inférieure à environ 50 joules par gramme, mais supérieure à environ 10 joules par gramme.

9. Etoffe conforme à la revendication 1, dans laquelle il y a en option, en une proportion inférieure à 10 % en poids, un troisième polymère qui est choisi dans l'ensemble formé par les suivants : polyéthylène haute densité, polyéthylène basse densité linéaire, et polyéthylène linéaire ou sensiblement linéaire, à ramifications homogènes.

10. Etoffe conforme à la revendication 1, dans laquelle le deuxième polymère constitue d'environ 10 % à environ 25 % du mélange de polymères.

11. Etoffe non conforme à la revendication 9, dans laquelle le troisième polymère représente d'environ 0,01 % à environ 5 % du poids du mélange de polymères.

12. Etoffe conforme à la revendication 1, laquelle étoffe est une étoffe obtenue par filage-liage et/ou fusion-soufflage.

13. Fibre d'un mélange de polymères comprenant :

a) d'environ 50 à environ 95 % en poids, par rapport au mélange de polymères, d'un premier composant polymère qui est un polypropylène isotactique présentant un indice de fluidité à chaud situé dans l'intervalle allant d'environ 2 à environ 40 grammes par 10 minutes,
b) et d'environ 5 à environ 50 % en poids, par rapport au mélange de polymères, d'un deuxième composant polymère qui est un élastomère ou plastomère à base de propylène de qualité réacteur, présentant un indice de distribution des masses moléculaires inférieur à environ 3,5, lequel deuxième polymère présente une chaleur de fusion inférieure à environ 90 joules par gramme, ainsi qu'un indice de fluidité à chaud situé dans l'intervalle allant d'environ 0,5 à environ 40 grammes par 10 minutes,

lequel mélange de polymères contient moins d'environ 5 % en poids de motifs dérivés de l'éthylène.

14. Fibre conforme à la revendication 13, qui présente un titre supérieur à 7 grammes par 9000 mètres.

15. Fibre conforme à la revendication 13, laquelle fibre a subi un étirage à froid.

16. Fibre conforme à la revendication 13, qui a subi un frisage.

17. Fibre conforme à la revendication 16, qui a subi un thermofixage.

18. Fibre conforme à la revendication 16, qui a subi en outre un tordage et un thermofixage.

19. Article fait d'une fibre conforme à la revendication 13, lequel article est choisi dans l'ensemble formé par les tapis, tissus d'ameublement, habits, revêtements muraux et tous articles tissés.

20. Fibre conforme à la revendication 13, laquelle fibre est une fibre conjuguée.

21. Fibre conforme à la revendication 20, dans laquelle le polymère constitue au moins une partie de la surface de la fibre.

22. Fibre conforme à la revendication 13, dans laquelle l'élastomère ou plastomère à base de propylène comporte de 3 à 7 % en poids de motifs d'éthylène.

**23.** Fibre conforme à la revendication 13, dans laquelle la surface en polymère comprend en outre une polyoléfine sur laquelle a été greffé un composé organique insaturé comportant au moins un site d'insaturation éthylénique et au moins un groupe carbonyle.

**24.** Fibre conforme à la revendication 23, dans laquelle le composé organique insaturé est l'anhydride maléique.

**25.** Etoffe conforme à la revendication 1, ou fibre conforme à la revendication 13, dans laquelle le premier polymère, le deuxième polymère, ou la composition de polymères dans son ensemble, comporte en outre un adjuvant lubrifiant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5626571 A, Young
- US 3855046 A, Hansen
- US 5405682 A
- US 5425987 A, Shawyer
- US 5336552 A, Strack
- US 5545464 A, Stokes
- US 5964742 A, McCormack
- US 6015605 A, TsuJiyama
- US P4076698 A, Anderson
- US P4644045 A, Fowells
- US P4830907 A, Sawyer
- US P4909975 A, Sawyer
- US P4578414 A, Sawyer
- US P4842922 A, Krupp
- US P4990204 A, Krupp
- US P5112686 A, Krupp
- US P5068141 A, Kubo
- US 5549867 A, Gessner
- WO 9532091 A, Stahl
- US 5677383 A, Lai, Knight, Chum, and Markovich
- EP 340982 A
- US 6015617 A
- US 6270891 A
- US 5804286 A
- WO 03040442 A
- US 5486419 A
- US 4021284 A, Kalwaites
- US 4024612 A, Contrator
- US P3485706 A, Evans
- US P4939016 A, Radwanski
- WO 0231245 A
- US 6010588 A
- US SN10139786 A
- WO 2003040442 A
- US 20030204017 A1
- US 5977251 A, Kao
- US P5504172 A
- WO 0001745 A
- US 20030204017 A
- US 5272236 A
- US 3645992 A, Elston
- US 5278272 A
- US 5844045 A
- US P6225243 A
- US 6140442 A
- US 5382400 A
- US 5108820 A
- US 5616664 A


### Non-patent literature cited in the description


- **S. Woekner.** softness and Touch - Important aspects of Non-wovens. *EDANA Intenational Nonwovens Symposium,* June 2003
- **Koenig.** Spectroscopy of Polymer. American Chemical Society, 1992
- **Randall.** *Journal of Macromolecular Science, Reviews in Macromolecular Chemistry and Physics,* 1989, vol. C29 (2, 3), 201-317
- **Randall's.** *Journal of Macromolecular Chemistry and Physics, Reviews in Macromolecular Chemistry and Physics,* 1989, vol. C29 (2, 3), 201-317
- Thermal Characterization of Polymeric Materials. Academic Press, 1981
- **Koenig J.L.** Spectroscopy of Polymers. American Chemical Society, 1992
- *Journal of Macromolecular Chemistry and Physics,* 1989, vol. C29 (2, 3), 201-317